# EUROPÄISCHE PATENTSCHRIFT

(11) **EP 1 176 074 B1**
(45) Veröffentlichungstag und Bekanntmachung des Hinweises auf die Patenterteilung: **24.09.2003**
(21) Anmeldenummer: 01116181.7
(22) Anmeldetag: 04.07.2001
(51) Int. Cl.: B60T 7/10

(54) **Betätigungsvorrichtung für eine Feststellbremse**
Actuator for a parking brake
Actionneur pour frein de stationnement

(30) Priorität: 27.07.2000 DE 10036547
(43) Veröffentlichungstag der Anmeldung: 30.01.2002
(73) Patentinhaber: Dietz-automotive GmbH & Co. KG, 73265 Dettingen unter Teck (DE)
(72) Erfinder: Bauer, Hans, 73265 Dettingen (DE)
(74) Vertreter: Ruckh, Rainer Gerhard, Dr.

(56) Entgegenhaltungen:
- DE-A- 19 521 159
- GB-A- 450 394
- US-A- 3 939 727
- US-A- 4 212 211

## Beschreibung

Die Erfindung betrifft eine Betätigungsvorrichtung für eine Feststellbremse gemäß dem Oberbegriff des Anspruchs 1.

Eine derartige Betätigungsvorrichtung ist aus der DE 195 21 159 C2 bekannt. Diese Betätigungsvorrichtung umfasst einen Handbremshebel, der an einem Lagerbock schwenkbar gelagert ist. Zur Betätigung der Feststellbremse ist eine Betätigungsstange vorgesehen, die in Eingriff mit einer Festsetzeinrichtung steht. Die Betätigungsstange verläuft in einer rohrförmigen Aufnahme des Handbremshebels. Am vorderen Ende der Betätigungsstange ist ein Druckknopf vorgesehen, der über die rohrförmige Aufnahme hervorsteht und von einer Bedienperson betätigbar ist.

Die Festsetzeinrichtung besteht aus einem Sperrsegment und einer Sperrklinke. Das Sperrsegment ist am Lagerbock befestigt und weist eine Leiste mit Rastzähnen auf. Die Sperrklinke ist an einem Lagerzapfen des Handbremshebels schwenkbar gelagert und über ein Federelement vorgespannt. Dabei ist die Sperrklinke so am Lagerzapfen gelagert, dass diese in zwei beidseits des Lagerzapfens verlaufende Schwenkarme unterteilt ist. An einem Ende eines ersten Schwenkarmes sind Rastnasen vorgesehen, die zur Fixierung der Sperrklinke am Sperrsegment in die Rastzähne des Sperrsegments greifen. Das Ende des zweiten Schwenkarmes ist über eine Gelenkverbindung am unteren Ende der Betätigungsstange befestigt.

Zur Betätigung der Feststellbremse wird der Handbremshebel geschwenkt. Die Schwenkbewegung wird über die Betätigungsstange auf die Sperrklinke übertragen. In einer Endposition rastet die Sperrklinke an dem Sperrsegment ein und fixiert den Handbremshebel in der entsprechenden Position.

Zur Lösung des Handbremshebels aus dieser Position wird der Druckknopf betätigt, wodurch die Sperrklinke vom Sperrsegment gelöst wird. Somit kann der Handbremshebel wieder in seine Ausgangsposition gebracht werden.

Nachteilig bei derartigen Betätigungsvorrichtungen ist, dass während der Schwenkbewegung des Handbremshebels die Betätigungsstange und damit der Druckknopf in Längsrichtung bewegt wird, wobei die Bewegung des Druckknopfes für die Bedienperson sichtbar ist. Insbesondere bei einem Einbau derartiger Betätigungsvorrichtungen in Personenwagen der oberen Preisklasse ist eine derartige Bewegung unerwünscht. Die Bewegung des Druckknopfes wird dadurch verursacht, dass bei Schwenken des Handbremshebels die Sperrklinke mit ihren Rastnasen entlang der Leiste mit den Rastzähnen am Sperrsegment bewegt wird. Dies führt zu einer oszillierenden Bewegung der Sperrklinke, die auf die Betätigungsstange übertragen wird.

Der Erfindung liegt die Aufgabe zugrunde, eine Betätigungsvorrichtung der eingangs genannten Art so auszubilden, dass während der Schwenkbewegung des Handbremshebels eine für eine Bedienperson sichtbare Bewegung der Betätigungsstange oder eines daran befestigten Druckknopfes vermieden wird.

Zur Lösung dieser Aufgabe sind die Merkmale des Anspruchs 1 vorgesehen. Vorteilhafte Ausrührungsformen und zweckmäßige Weiterbildungen der Erfindung sind in den Unteransprüchen beschrieben.

Die erfindungsgemäße Betätigungsvorrichtung weist eine Sperrklinke mit einem Segment auf, welches mit vorgegebenem Spiel in einer Aufnahme der Betätigungsstange gelagert ist. Dabei ist die Sperrklinke in einer Raststellung am Sperrsegment durch die Aufnahme fixiert.

Bei Schwenken des Handbremshebels ist die Sperrklinke entlang des Sperrsegments geführt, wobei die durch den Kontakt mit dem Sperrsegment induzierte Bewegung der Sperrklinke durch die Bewegung des Segments in der Aufnahme aufgenommen ist. Dadurch ist die Betätigungsstange an der Bewegung der Sperrklinke entkoppelt.

Der Grundgedanke der Erfindung liegt somit darin, die Sperrklinke nicht starr an die Betätigungsstange zu koppeln. Vielmehr ist zur Kopplung eine Aufnahme an der Betätigungsstange vorgesehen, in welcher ein Segment an der Sperrklinke mit Spiel gelagert ist.

Dadurch ist die Betätigungsstange von der Bewegung der Sperrklinke, die während des Schwenkens des Handbremshebels durch den Kontakt der Sperrklinke und dem Sperrsegment entsteht, entkoppelt, so dass die Betätigungsstange und insbesondere ein an deren vorderem Ende angebrachter Druckknopf während der Schwenkbewegung des Handbremshebels in seiner Ruhestellung verbleibt.

Wesentlich dabei ist, dass trotz des Bewegungsspielraums des Segments der Sperrklinke in der Aufnahme die Sperrklinke in einer Raststellung am Sperrsegment fest anliegt, so dass ein unkontrolliertes Herauslösen der Sperrklinke aus der Raststellung vermieden wird.

In einer vorteilhaften Ausführungsform der Erfindung ist die Aufnahme von einer Ausnehmung am unteren Ende der Betätigungsstange gebildet. Dabei ist die Ausnehmung von zwei Seitenwänden begrenzt, zwischen welchen das Segment an einem ersten Ende der Sperrklinke mit vorgegebenem Spiel gelagert ist.

Die schwenkbar gelagerte Sperrklinke weist an ihrem zweiten Ende eine Rastnase auf, die zur Fixierung der Sperrklinke am Sperrsegment in einer Leiste mit Restzähnen an deren Sperrsegment einrastbar ist.

In diesem Fall ist die Größe des Spiels des Segments in der Ausnehmung an die Höhen der Rastzähne angepasst, so dass durch eine Bewegung des Segments in der Ausnehmung die Bewegung der Sperrklinke bei Führen der Rastnase über die Rastzähne des Sperrelements vollständig aufgenommen werden kann.

Ein wesentlicher Vorteil der erfindungsgemäßen Vorrichtung besteht darin, dass die Entkopplung der Betätigungsstange von der Bewegung der Sperrklinke mit einem äußerst geringen konstruktiven Aufwand bewerkstelligt werden kann. Dabei umfassen die einzelnen Komponenten dieser Vorrichtung nur eine geringe Anzahl von Bauteilen, wobei die Fertigung dieser Bauteile insbesondere dadurch kostengünstig durchführbar ist, dass die Bauteile keine strengen Anforderungen bezüglich der Fertigungstoleranzen erfüllen müssen, um eine sichere Funktion der Vorrichtung zu gewährleisten.

Die Erfindung wird im nachstehenden anhand der Zeichnungen erläutert. Es zeigen:
- Figur 1:: Ausführungsbeispiel der erfindungsgemäßen Betätigungsvorrichtung für eine Feststellbremse mit einer eine Sperrklinke und ein Sperrsegment aufweisenden Festsetzeinrichtung.
- Figur 2:: Schematische Darstellung zweier Schwenkstellungen der Sperrklinke am Sperrsegment für die Festsetzeinrichtung gemäß Figur 1.

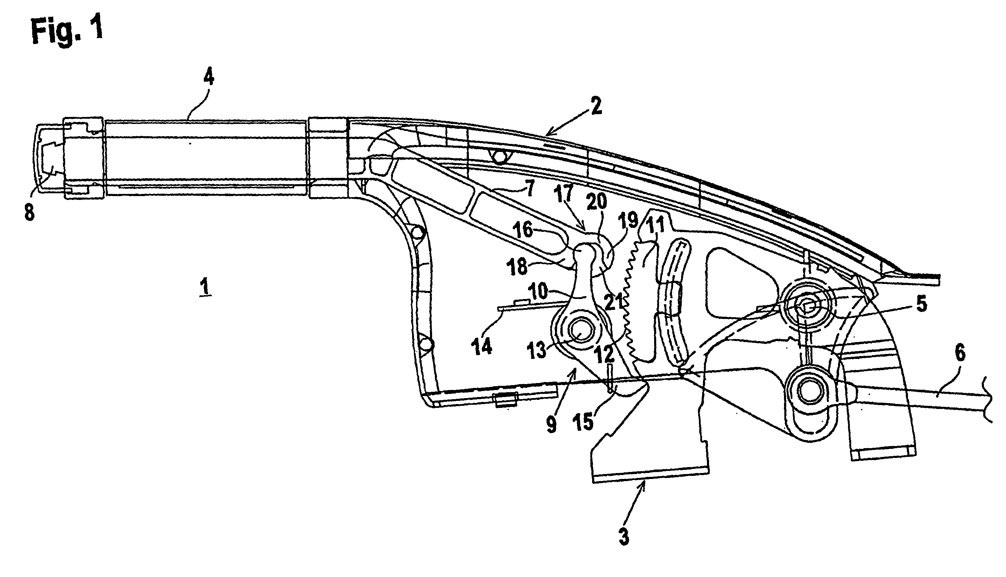

Figur 1 zeigt ein Ausführungsbeispiel der erfindungsgemäßen Betätigungsvorrichtung 1 für eine Feststellbremse in einem Fahrzeug.

Die Betätigungsvorrichtung 1 weist einen Handbremshebel 2 auf, welcher schwenkbar an einem Lagerbock 3 gelagert ist.

Der Handbremshebel 2 weist einen Grundkörper auf, an dessen Vorderende eine rohrförmige Führung 4 anschließt. Im Bereich des Grundkörpers ist der Handbremshebel 2 mittels eines Lagerzapfens 5 um eine horizontal verlaufende Schwenkachse gelagert.

Zudem ist am Lagerbock 3 eine Zugstange 6 gelagert, die mit dem Handbremshebel 2 gekoppelt ist. Die jeweilige Stellung des Handbremshebels 2 wird über diese Zugstange 6 auf die nicht dargestellte Feststellbremse des Fahrzeugs übertragen.

In der rohrförmigen Führung 4 ist der vordere Teil einer Betätigungsstange 7 gelagert. Die Betätigungsstange 7 ist vorzugsweise einstückig ausgebildet und besteht beispielsweise aus einem Kunststoffspritzteil. An das Vorderende der Betätigungsstange 7 schließt ein Druckknopf 8 an, der über eine Öffnung am Vorderende der rohrförmigen Führung 4 hervorsteht und so von einer Bedienperson betätigt werden kann.

Der Druckknopf 8 ist starr mit der Betätigungsstange 7 verbunden oder einstückig mit dieser ausgebildet. Die Betätigungsstange 7 weist zwei in stumpfem Winkel, jeweils längs einer Geraden verlaufende Stangensegmente auf, wobei das erste Stangensegment in der rohrförmigen Führung 4 verläuft und das zweite Stangensegment im Bereich des Grundkörpers des Handbremshebels 2 verläuft.

Dieses Stangensegment der Betätigungsstange 7 ist mit einer Festsetzeinrichtung 9 gekoppelt. Mit dieser Festsetzeinrichtung 9 kann der Handbremshebel 2 in einer vorgegebenen Schwenkstellung fixiert werden.

Die Festsetzeinrichtung 9 weist eine Sperrklinke 10 und ein Sperrsegment 11 auf. Das Sperrsegment 11 ist am Lagerbock 3 befestigt und weist eine Leiste mit Rastzähnen 12 auf. Die Leiste verläuft längs eines Kreisbogens. Längs der Leiste sind die jeweils identisch ausgebildeten Rastzähne 12 hintereinander angeordnet. Die Rastzähne 12 weisen im vorliegenden Ausführungsbeispiel die Formen von Dreiecken auf.

Die Sperrklinke 10 ist an einem Lagerzapfen 13 des Handbremshebels 2 um eine horizontal verlaufende Schwenkachse schwenkbar gelagert und über ein Federelement 14 vorgespannt.

Die Schwenkachse läuft durch das Zentrum der Sperrklinke 10 und unterteilt diese in zwei beidseits zur Schwenkachse verlaufende Schwenkarme. Der erste Schwenkarm der Sperrklinke 10 ist an die Betätigungsstange 7 gekoppelt. Der zweite Schwenkarm der Sperrklinke 10 steht in Eingriff mit dem Sperrsegment 11. Hierzu weist die Sperrklinke 10 am vorderen Ende des zweiten Schwenkarmes eine Rastnase 15 auf, die an den Rastzähnen 12 des Sperrsegments 11 eingerastet werden kann.

Erfindungsgemäß weist die Sperrklinke 10 am oberen Ende des ersten Schwenkarmes ein Segment 16 auf, welches mit Spiel in einer Aufnahme 17 der Betätigungsstange 7 mit vorgegebenem Spiel gelagert ist.

Das Segment 16 weist im wesentlichen die Form eines Kreisscheibensegments auf und bildet eine Querschnittsverbreiterung am vorderen Ende des ersten Schwenkarmes der Sperrklinke 10.

Die Aufnahme 17 befindet sich am unteren Ende der Betätigungsstange 7. Dabei ist die Aufnahme 17 von einer Ausnehmung gebildet, die von zwei Seitenwänden 18, 19 begrenzt ist. Die Seitenwände 18, 19 sind über ein Wandelement 20 an ihrer Oberseite verbunden. Die unteren Ränder der Seitenwände 18, 19 münden an einer Öffnung aus, in welche das Segment 16 der Sperrklinke 10 greift.

Die Innenseiten der Seitenwände 18, 19 liegen in Abstand einander gegenüber, so dass das Segment 16 mit vorgegebenem Spiel zwischen den Seitenwänden 18, 19 gelagert ist.

Die Konturen der Innenseiten der Seitenwände 18, 19 sind jeweils an die Kontur des Segments 16 der Sperrklinke 10 angepasst, so dass das Segment 16 in den jeweiligen Grenzlagen mit einem Abschnitt der Mantelfläche formschlüssig an der jeweiligen Innenseite der Seitenwand 18, 19 anliegt.

Der Abstand der so ausgebildeten Seitenwände 18, 19 verjüngt sich damit zur Öffnung am unteren Rand hin.

Das die Seitenwände 18, 19 verbindende Wandelement 20 schließt an diese kontinuierlich an, so dass das Segment 16 mit dem oberen Teil der Mantelfläche an dem Wandelement 20 anliegt.

Die Ausnehmung ist an der Hinterseite von einer Wand 21 begrenzt. Bei Aufsetzen der Sperrklinke 10 auf den Lagerzapfen 13 wird das Segment 16 in die Ausnehmung eingelegt, bis dieses auf der Wand 21 aufliegt.

Dabei ist die Bauhöhe des Segments 16 an die Höhen der Seitenwände 18, 19 der Aufnahme 17 angepasst, so dass das Segment 16 vorzugsweise nicht über die Seitenwände 18, 19 der Aufnahme 17 übersteht.

Das so ausgebildete Segment 16 der Sperrklinke 10 ist in der Aufnahme 17 an der Betätigungsstange 7 somit derart gelagert, dass sich das Segment 16 auch bei Schwenken der Sperrklinke 10 nicht aus der Aufnahme 17 löst.

Weiterhin ist das Segment 16 in der Aufnahme 17 derart gelagert, dass die Sperrklinke 10 in einer Raststellung oder Ruhestellung am Sperrsegment 11 fixiert und gegen ein ungewolltes Ablösen vom Sperrsegment 11 gesichert ist.

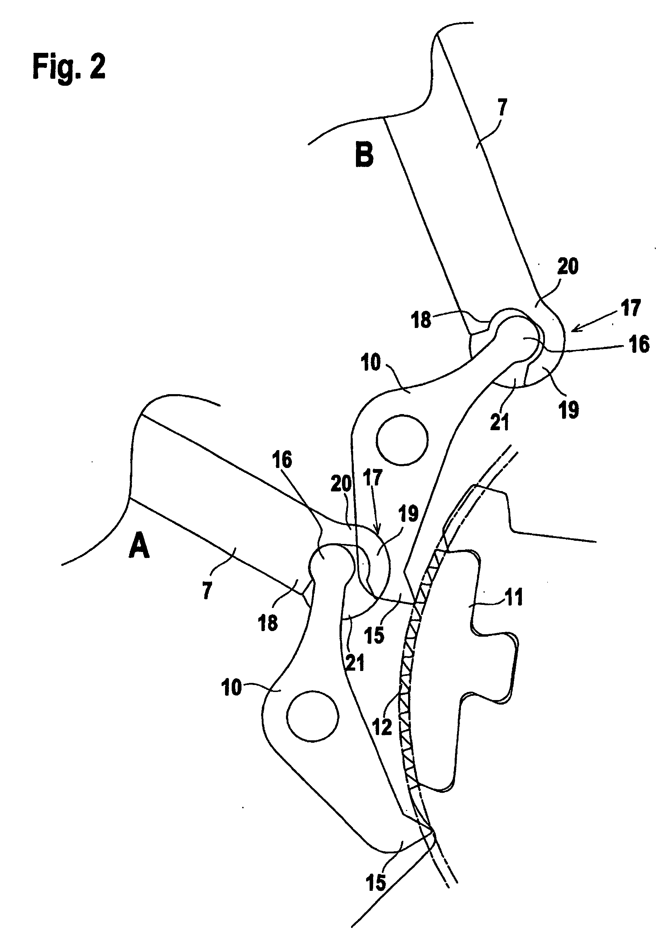

Eine derartige Raststellung oder Ruhestellung der Sperrklinke 10 ist in Figur 1 und in Figur 2 in der mit A bezeichneten Stellung der Sperrklinke 10 dargestellt.

In diesem Fall befindet sich der Handbremshebel 2 in einer unteren Endposition, so dass die Feststellbremse des Fahrzeugs nicht betätigt ist. Die Rastnase 15 ist gegen einen an die Leiste mit den Rastzähnen 12 anschließenden Abschnitt des Sperrsegments 11 gedrückt.

In dieser Position der Sperrklinke 10 liegt das Segment 16 am ersten Schwenkarm an der linken Seitenwand 18 der Aufnahme 17 an. Die Seitenwand 18 bildet in diesem Fall einen Anschlag, gegen welchen das Segment 16 gedrückt wird. Dadurch wird ungewolltes Herauslösen der Sperrklinke 10 aus der Ruhestellung vermieden.

Zur Betätigung der Feststellbremse wird der Handbremshebel 2 nach oben bewegt, bis dieser eine vorgegebene Sollposition erreicht. In dieser Sollposition rastet die Sperrklinke 10 mit der Rastnase 15 an einer entsprechenden Position der Leiste mit den Rastzähnen 12 ein. In dieser Raststellung liegt das Segment 16 wiederum an der den Anschlag bildenden linken Seitenwand 18 der Aufnahme 17, so dass die Sperrklinke 10 gegen ein Lösen von dem Sperrsegment 11 gesichert ist.

Durch Betätigen des Druckknopfes 8 wird die Rasterung der Sperrklinke 10 am Sperrsegment 11 gelöst, worauf der Handbremshebel 2 wieder in seine Ausgangsstellung geschwenkt werden kann.

Während der Schwenkbewegung des Handbremshebels 2 wird die Rastnase 15 der Sperrklinke 10 über die Rastzähne 12 des Sperrsegments 11 bewegt. Durch das fortlaufende Eintauchen und Herauslösen der Rastnase 15 aus den Zwischenräumen zwischen den Rastzähnen 12 führt die Sperrklinke 10 eine oszillierende Bewegung aus.

Durch die erfindungsgemäße Lagerung des Segments 16 in der Aufnahme 17 der Betätigungsstange 7 ist die Betätigungsstange 7 von dieser Bewegung entkoppelt. Damit ist insbesondere gewährleistet, dass die Bewegung der Sperrklinke 10 nicht auf den Druckknopf 8 übertragen wird, so dass dieser während der Schwenkbewegung unverändert in einer festen Position verbleibt.

Die Entkopplung der Betätigungsstange 7 von der Bewegung der Sperrklinke 10 wird dadurch erreicht, dass das Segment 16 in der Ausnehmung mit hinreichend großem Spiel zwischen den beiden Seitenwänden 18, 19 liegt. Die Größe des Spiels entspricht dabei vorzugsweise etwa der Höhe der Rastzähne 12 an der Leiste des Sperrsegments 11.

Die durch die Führung 4 der Rastnase 15 über die Rastzähne 12 des Sperrsegments 11 hervorgerufene oszillierende Bewegung der Sperrklinke 10 wird dann dadurch aufgenommen, dass sich das Segment 16 der Sperrklinke 10 oszillierend zwischen den Seitenwänden 18, 19 der Aufnahme 17 bewegen kann, ohne dass das Segment 16 dabei gegen die Seitenwände 18, 19 drückt. Damit nimmt die Betätigungsstange 7 an der oszillierenden Bewegung der Sperrklinke 10 nicht teil.

Eine Zwischenstellung des Segments 16 zwischen den Seitenwänden 18, 19 der Aufnahme 17 während der Bewegung ist in Figur 2 in der mit B bezeichneten Position der Sperrklinke 10 dargestellt. In dieser Position liegt die Rastnase 15 der Sperrklinke 10 an der Oberkante eines Rastzahnes 12 am oberen Ende des Sperrsegments 11. Das Segment 16 liegt in diesem Fall in der Mitte zwischen den Seitenwänden 18, 19.

Wie aus Figur 2 ersichtlich, liegt die Oberseite des Segments 16 an dem Wandelement 20 der Aufnahme 17 während der Bewegung der Sperrklinke 10 an, wobei durch diesen Kontakt keine Übertragung der Bewegung der Sperrklinke 10 auf die Betätigungsstange 7 erfolgt.

### Bezugszeichenliste

- (1): Betätigungsvorrichtung
- (2): Handbremshebel
- (3): Lagerbock
- (4): Führung
- (5): Lagerzapfen
- (6): Zugstange
- (7): Betätigungsstange
- (8): Druckknopf
- (9): Festsetzeinrichtung
- (10): Sperrklinke
- (11): Sperrsegment
- (12): Rastzähne
- (13): Lagerzapfen
- (14): Federelement
- (15): Rastnase
- (16): Segment
- (17): Aufnahme
- (18): Seitenwand
- (19): Seitenwand
- (20): Wandelement
- (21): Wand

## Patentansprüche

1. Betätigungsvorrichtung für eine Feststellbremse mit einem an einem Lagerbock schwenkbar gelagerten Handbremshebel (2), mit einer Festsetzeinrichtung (9), welche ein am Lagerbock fixiertes Sperrsegment (11) und eine beweglich gelagerte Sperrklinke (10) aufweist, und mit einer im Handbremshebel (2) geführten und mit der Sperrklinke gekoppelten Betätigungsstange (7), **dadurch gekennzeichnet, dass** ein Segment (16) der Sperrklinke (10) mit vorgegebenem Spiel in einer Aufnahme (17) der Betätigungsstange (7) gelagert ist, so dass die Sperrklinke (10) in einer Raststellung am Sperrsegment (11) durch die Aufnahme (17) fixiert ist, und dass bei Schwenken des Handbremshebels (2) die Sperrklinke (10) entlang des Sperrsegments (11) geführt ist, wobei die Betätigungsstange (7) von der durch den Kontakt mit dem Sperrsegment (11) induzierten Bewegung der Sperrklinke (10) durch die Bewegung des Segments (16) in der Aufnahme (17) entkoppelt ist.

2. Betätigungsvorrichtung nach Anspruch 1, **dadurch gekennzeichnet, dass** die Sperrklinke (10) am Handbremshebel (2) um eine Schwenkachse schwenkbar gelagert ist, so dass die Sperrklinke (10) in zwei beidseits der Schwenkachse verlaufende Schwenkarme unterteilt ist, wobei am Ende des ersten Schwenkarms das Segment (16) angeordnet ist, und wobei der zweite Schwenkarm in Eingriff mit dem Sperrsegment (11) steht.

3. Betätigungsvorrichtung nach einem der Ansprüche 1 oder 2, **dadurch gekennzeichnet, dass** das Sperrsegment (11) eine Leiste mit Rastzähnen (12) aufweist, in welche zur Fixierung der Sperrklinke (10) eine Rastnase (15) am Ende des zweiten Schwenkarmes greift.

4. Betätigungsvorrichtung nach einem der Ansprüche 1 - 3, **dadurch gekennzeichnet, dass** die Aufnahme (17) von einer Ausnehmung am unteren Ende der Betätigungsstange (7) gebildet ist.

5. Betätigungsvorrichtung nach Anspruch 4, **dadurch gekennzeichnet, dass** die Ausnehmung seitlich von zwei Seitenwänden (18, 19) begrenzt ist, welche über ein Wandelement (20) an ihrer Oberseite verbunden sind, und dass die Seitenwände (18, 19) an ihren unteren Rändern an einer Öffnung ausmünden, in welche das Segment (16) der Sperrklinke (10) greift.

6. Betätigungsvorrichtung nach einem der Ansprüche 1 - 5, **dadurch gekennzeichnet, dass** das Segment (16) der Sperrklinke (10) zwischen den Seitenwänden (18, 19) der Ausnehmung mit Spiel gelagert ist.

7. Betätigungsvorrichtung nach Anspruch 6, **dadurch gekennzeichnet, dass** die Größe des Spiels an die Höhen der Rastzähne (12) an der Leiste des Sperrsegments (11) angepasst ist.

8. Betätigungsvorrichtung nach Anspruch 7, **dadurch gekennzeichnet, dass** bei gegen das Sperrsegment (11) bewegter Sperrklinke (10) das Segment (16) innerhalb der Ausnehmung zwischen den Seitenwänden (18, 19) ausgelenkt wird.

9. Betätigungsvorrichtung nach einem der Ansprüche 6 - 8, **dadurch gekennzeichnet, dass** das Segment (16) als Kreisscheibensegment ausgebildet ist.

10. Betätigungsvorrichtung nach einem der Ansprüche 7 - 9, **dadurch gekennzeichnet, dass** bei gegen das Sperrsegment (11) bewegter Sperrklinke (10) das Segment (16) an dem die Ausnehmung zur Oberseite hin begrenzenden Wandelement (20) anliegt.

11. Betätigungsvorrichtung nach Anspruch 10, **dadurch gekennzeichnet, dass** das Segment (16) eine Querschnittsverbreiterung des ersten Schwenkarmes der Sperrklinke (10) bildet.

12. Betätigungsvorrichtung nach einem der Ansprüche 5 - 11 **dadurch gekennzeichnet, dass** die Konturen der Innenseiten der Seitenwände (18, 19) der Ausnehmung an die Kontur des Segments (16) angepasst sind.

13. Betätigungsvorrichtung nach einem der Ansprüche 5 - 12, **dadurch gekennzeichnet, dass** eine der Seitenwände (18, 19) der Ausnehmung einen Anschlag bildet, gegen welchen das Segment (16) zur Fixierung der Sperrklinke (10) an dem Sperrsegment (11) gedrückt ist.

14. Betätigungsvorrichtung nach einem der Ansprüche 4 - 13, **dadurch gekennzeichnet, dass** die Ausnehmung an ihrer Hinterseite von einer Wand (21) begrenzt ist, auf welcher das Segment (16) der Sperrklinke (10) aufliegt.

15. Betätigungsvorrichtung nach einem der Ansprüche 5 - 14, **dadurch gekennzeichnet, dass** die Bauhöhe des Segments (16) der Sperrklinke (10) an die Höhen der die Ausnehmung begrenzenden Seitenwände (18, 19) angepasst ist.

16. Betätigungsvorrichtung nach einem der Ansprüche 1 - 15, **dadurch gekennzeichnet, dass** an dem vorderen Ende der Betätigungsstange (7) zu deren Betätigung ein Druckknopf (8) vorgesehen ist.

## Claims

1. Actuating device for a parking brake with a handbrake lever (2), which is pivotably mounted at a bearing block, with a fixing device (9), which comprises a ratchet segment (11) fixed to the bearing block and movably mounted pawl (10), and with an actuating rod (7) guided in the handbrake lever (2) and coupled with the pawl, **characterised in that** a segment (16) of the pawl (10) is mounted in a receptacle (17) of the actuating rod (7) with predetermined play so that the pawl (10) is fixed in a detent setting at the ratchet segment (11) by the receptacle (17), and that on pivotation of the handbrake lever (2) the pawl (10) is guided along the ratchet segment (11), wherein the actuating rod (7) is decoupled from the movement, which is induced by the contact with the ratchet segment (11), of the pawl (10) by the movement of the segment (16) in the receptacle (17).

2. Actuating device according to claim 1, **characterised in that** the pawl (10) is mounted at the handbrake lever (2) to be pivotable about a pivot axis so that the pawl (10) is divided into two pivot arms extending at both sides of the pivot axis, wherein the segment (16) is arranged at the end of the first pivot arm and wherein the second pivot arm is disposed in engagement with the ratchet segment (11).

3. Actuating device according to one of claims 1 and 2, **characterised in that** the ratchet segment (11) comprises a strip with detent teeth (12) in which a detent nose (15) at the end of the second pivot arm engages for fixing the pawl (10).

4. Actuating device according to one of claims 1 to 3, **characterised in that** the receptacle (17) is formed by a recess at the lower end of the actuating rod (7).

5. Actuating device according to claim 4, **characterised in that** the recess is laterally bounded by two side walls (18, 19) which are connected by way of a wall element (20) at the upper side thereof and that the side walls (18, 19) open at the lower edges thereof at an opening in which the segment (16) of the pawl (10) engages.

6. Actuating device according to one of claims 1 to 5, **characterised in that** the segment (16) of the pawl (10) is mounted with play between the side walls (18, 19) of the recess.

7. Actuating device according to claim 6, **characterised in that** the size of the play is matched to the height of the detent teeth (12) at the strip of the ratchet segment (11).

8. Actuating device according to claim 7, **characterised in that** when the pawl (10) is moved against the ratchet segment (11) the segment (16) is deflected within the recess between the side walls (18, 19).

9. Actuating device according to one of claims 6 to 8, **characterised in that** the segment (16) is formed as a segment of the circular disc.

10. Actuating device according to one of claims 7 to 9, **characterised in that** when the pawl (10) is moved against the ratchet segment (11) the segment (16) bears against the wall element (20) bounding the recess towards the upper side.

11. Actuating device according to claim 10, **characterised in that** the segment (16) forms a cross-sectional enlargement of the first pivot arm of the pawl (10).

12. Actuating device according to one of claims 5 to 11, **characterised in that** the contours of the inner sides of the side walls (18, 19) of the recess are matched to the contour of the segment (16).

13. Actuating device according to one of claims 5 to 12, **characterised in that** one of the side walls (18, 19) of the recess forms an abutment against which the segment (16) is pressed for fixing the pawl (10) at the ratchet segment (11).

14. Actuating device according to one of claims 4 to 13, **characterised in that** the recess is bounded at the rear side thereof by a wall (21) on which the segment (16) of the pawl (10) rests.

15. Actuating device according to one of claims 5 to 14, **characterised in that** the constructional height of the segment (16) of the pawl (10) is matched to the height of the side walls (18, 19) bounding the recess.

16. Actuating device according to one of claims 1 to 15, **characterised in that** a press button (8) is provided at the forward end of the actuating rod (7) for actuation thereof.

## Revendications

1. Actionneur pour un frein de stationnement équipé d'un levier (2) de freinage manuel monté à pivotement sur un sabot de montage, comprenant un dispositif d'immobilisation (9) présentant un segment de blocage (11) verrouillé à demeure sur le sabot de montage, et un cliquet de blocage (10) monté mobile ; et une tige d'actionnement (7) guidée dans le levier (2) de freinage manuel et accouplée au cliquet de blocage, **caractérisé par le fait qu'**un segment (16) du cliquet de blocage (10) est monté, avec jeu préétabli, dans un logement (17) de la tige d'actionnement (7), de sorte que ledit cliquet de blocage (10) est verrouillé à demeure sur le segment de blocage (11), dans une position encliquetée, par l'intermédiaire du logement (17); et **par le fait que** le cliquet de blocage (10) est guidé le long du segment de blocage (11) lors d'un pivotement du levier (2) de freinage manuel, la tige d'actionnement (7) étant désaccouplée par le mouvement du cliquet de blocage (10) induit par le contact avec le segment de blocage (11), suite au mouvement du segment (16) dans le logement (17).

2. Actionneur selon la revendication 1, **caractérisé par le fait que** le cliquet de blocage (10) est monté pivotant autour d'un axe de pivotement sur le levier (2) de freinage manuel, de sorte que ledit cliquet de blocage (10) est scindé en deux bras pivotants s'étendant de part et d'autre dudit axe de pivotement, le segment (16) étant disposé à l'extrémité du premier bras pivotant, et le second bras pivotant étant en prise avec le segment de blocage (11).

3. Actionneur selon l'une des revendications 1 ou 2, **caractérisé par le fait que** le segment de blocage (11) comporte une barrette munie de dents d'encliquetage (12) dans lesquelles pénètre, en vue du verrouillage à demeure du cliquet de blocage (10), un mentonnet encliquetable (15) situé à l'extrémité du second bras pivotant.

4. Actionneur selon l'une des revendications 1-3, **caractérisé par le fait que** le logement (17) est matérialisé par un évidement pratiqué à l'extrémité inférieure de la tige d'actionnement (7).

5. Actionneur selon la revendication 4, **caractérisé par le fait que** l'évidement est délimité, latéralement, par deux parois latérales (18, 19) reliées, à leur face supérieure, par l'intermédiaire d'un élément de cloisonnement (20) ; et **par le fait que** lesdites parois latérales (18, 19) s'achèvent, sur leurs bords inférieurs, par un orifice dans lequel pénètre le segment (16) du cliquet de blocage (10).

6. Actionneur selon l'une des revendications 1-5, **caractérisé par le fait que** le segment (16) du cliquet de blocage (10) est monté avec jeu entre les parois latérales (18, 19) de l'évidement.

7. Actionneur selon la revendication 6, **caractérisé par le fait que** l'ampleur du jeu est adaptée aux hauteurs des dents d'encliquetage (12) situées sur la barrette du segment de blocage (11).

8. Actionneur selon la revendication 7, **caractérisé par le fait que**, lorsque le cliquet de blocage (10) est animé d'un mouvement vers le segment de blocage (11), le segment (16) est dévié entre les parois latérales (18, 19) à l'intérieur de l'évidement.

9. Actionneur selon l'une des revendications 6-8, **caractérisé par le fait que** le segment (16) est réalisé sous la forme d'un segment de disque circulaire.

10. Actionneur selon l'une des revendications 7-9, **caractérisé par le fait que**, lorsque le cliquet de blocage (10) est animé d'un mouvement vers le segment de blocage (11), le segment (16) porte contre l'élément de cloisonnement (20) délimitant l'évidement en direction de la face supérieure.

11. Actionneur selon la revendication 10, **caractérisé par le fait que** le segment (16) matérialise un élargissement de section transversale du premier bras pivotant du cliquet de blocage (10).

12. Actionneur selon l'une des revendications 5-11, **caractérisé par le fait que** les profils des faces intérieures des parois latérales (18, 19) de l'évidement sont adaptés au profil du segment (16).

13. Actionneur selon l'une des revendications 5-12, **caractérisé par le fait que** l'une des parois latérales (18, 19) de l'évidement matérialise une butée contre laquelle le segment (16) est pressé en vue du verrouillage à demeure du cliquet de blocage (10) sur le segment de blocage (11).

14. Actionneur selon l'une des revendications 4-13, **caractérisé par le fait que** l'évidement est délimité, à sa face postérieure, par une paroi (21) contre laquelle est appliqué le segment (16) du cliquet de blocage (10).

15. Actionneur selon l'une des revendications 5-14, **caractérisé par le fait que** la hauteur de réalisation du segment (16) du cliquet de blocage (10) est adaptée aux hauteurs des parois latérales (18, 19) délimitant l'évidement.

16. Actionneur selon l'une des revendications 1-15, **caractérisé par le fait qu'**un bouton-poussoir (8) est prévu à l'extrémité antérieure de la tige d'actionnement (7), en vue de manoeuvrer cette dernière.
